# EUROPEAN PATENT SPECIFICATION

(11) **EP 0 428 254 B1**
(45) Date of publication and mention of the grant of the patent: **13.11.1996**
(21) Application number: 90310304.2
(22) Date of filing: 20.09.1990
(51) Int. Cl.: H04L 12/24

(54) **Circuitry for verifying communicants in a communication apparatus**
Vorrichtung zur Überprüfung von Teilnehmern in einem Kommunikationsgerät
Circuit de vérification de participants dans un appareil de communications

(30) Priority: 20.09.1989 JP 244722/89
(43) Date of publication of application: 22.05.1991
(73) Proprietor: MATSUSHITA GRAPHIC COMMUNICATION SYSTEMS, INC., Meguro-ku Tokyo-to 153 (JP)
(72) Inventor: Hagiwara, Takashi, Midori-ku, Yokohama-shi, Kanagawa, 226 (JP)
(74) Representative: Fane, Christopher Robin King

(56) References cited:
- EP-A- 0 269 978
- FR-A- 2 451 075
- PATENT ABSTRACTS OF JAPAN, vol. 012, no. 094 (E-593), 26th March 1988; & JP-A-62 225 053 (TOSHIBA) 03-10-1987
- PATENT ABSTRACTS OF JAPAN, vol. 012, no. 101 (E-595), 2nd April 1988; & JP-A-62 231 558 (MITSUBISHI) 12-10-1987
- PATENT ABSTRACTS OF JAPAN, vol. 012, no. 189 (E-616), 2nd June 1988; & JP-A-62 293 865 (N.T.T.) 21-12-1987

## Description

This invention relates to verifying communicants in communication apparatus.

Recently with the widespread use of communication apparatuses like facsimile (FAX) machines, problems have arisen such as communications being made to a wrong person due to a wrong line connection and frequent receipt of direct FAX mail. As a result, a technology for preventing such an unnecessary communication has been sought.

In a commonly used existing technology for preventing an unnecessary communication, a user manually stores an identification data item (ID) in a memory for each communicant from whom he wishes to be able to receive incoming communications and these stored IDs are compared with the ID received from the communicant at the beginning of an incoming communication for an approval of the incoming communication.

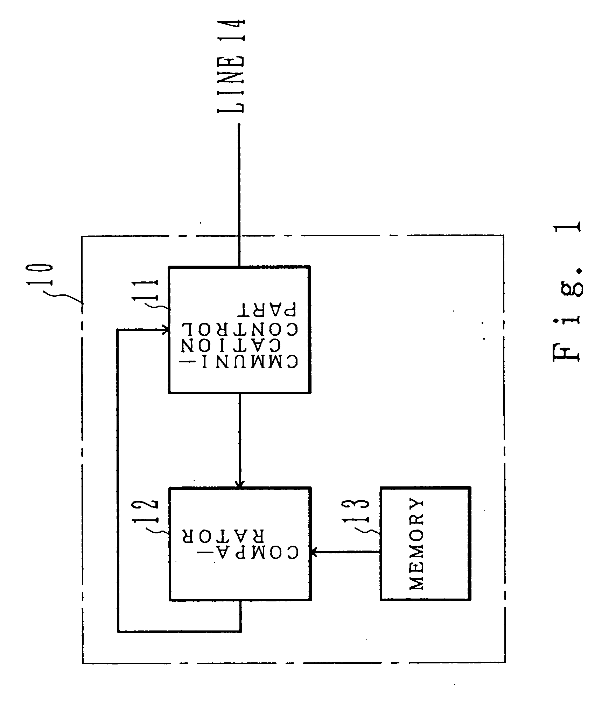

Figure 1 is a block diagram of communicant verification circuitry based on the above described approach. This circuitry is suitable for use in a first communication unit to selectively permit or prohibit receipt by the unit of incoming communications from further communication units connected with the first communication unit when it is in use, the first and further communication units having a predetermined communication protocol according to which, when the first communication unit initiates an outgoing communication to one of the further communication units, the further communication unit concerned responds by sending back to the first communication unit an item of identification data (ID) identifying the further communication unit concerned, which item is also sent by the further communication unit concerned to the first communication unit when the further communication unit concerned initiates a communication to the first communication unit. The circuitry includes: identification data memory means for storing, for each of the said further communication units from which receipt of a communication is permitted, such an item of identification data (ID) identifying the unit concerned; comparison means operable, upon receipt by the first communication unit of an incoming communication from one of the further communication units, to receive the item of identification data (ID) sent by the further communication unit concerned and to compare it in turn with each of the items of identification data stored in the said identification data memory means; and control means for permitting the first communication unit to continue to receive the incoming communication only if the result of the comparison is that the received item of identification data (ID) matches one of the stored items of identification data (ID).

In Figure 1, a communication apparatus (first communication unit) 10 comprises a memory (identification data memory means) 13 for registering the IDs inputted manually as discussed above and a comparator (comparator means) 12 for comparing the communicant's ID (further communication unit's ID) inputted via a communication control part 11 (control means) at a data receiving time with each stored ID in the memory 13. Only when a comparison result at the comparator 12 shows that the above IDs conform with each other, a signal is sent to the communication control part 11 approving continuation of receiving a signal. When a comparison result at the comparator 12 shows that the above IDs do not conform with each other, a different signal is sent to the communication control part 11 prohibiting continuation of the receipt. Circuitry of this kind is disclosed, for example, in FR-A-2451075.

However, in the above example of the existing technology, when it is desired to permit receipt of data from a new communicant (i.e. from a new one of the connected further communication units), his exact ID must be registered manually each time. Therefore, although an unwanted receipt is excluded, the cumbersome work of a manual registration is necessary. Thus, the prior art has a problem that the procedure required before a desired receipt is permitted is complicated.

This invention is made based on the above background. It aims to enable automatic registration in the memory of the communication apparatus of the IDs to be compared for conformance with the ID received at the beginning of a data receipt.

Communicant verification circuitry embodying to the present invention is provided with automatic registration means operable, upon such initiation by the first communication unit of an outgoing communication to one of the further communication units, to automatically register in the identification data memory means the item of identification data (ID) sent back to the first communication unit by the further communication unit concerned, so as to permit receipt by the first communication unit of a subsequent incoming communication from the further communication unit concerned.

Such communicant verification circuitry can verify a communicant and determine whether or not to continue a communication with him, before a communication apparatus like a FAX machine begins communication with the communicant.

A preferred embodiment of the invention has the following configuration.

An ID memory part stores an identification data item (ID), such as a telephone number, that identifies each communicant (i.e. each further communication unit concerned) from whom receipt of an incoming communication by the first communication unit is permitted.

A use frequency memory part memorizes a use frequency of each ID stored in the ID memory part.

A writing part receives and registers a communicant's ID (further communication unit's ID) when the first communication unit sends an outgoing communication (data transmission) to that communicant. If there is no unused memory area in the ID memory part at this registration time, the writing part deletes the least frequency used ID from the ID memory part by referring to the use frequency memory part and registers the received ID in the resulting unused memory region.

A comparison part receives the ID from the communicant at the beginning of an incoming communication (data receipt) by the first communication unit and sequentially compares the ID with each ID stored in the ID memory part, and continues the receiving process only when a conformance is detected.

A use frequency revising part updates the use frequency corresponding to the communicant's ID when a communication, i.e. either receiving or sending, is in progress.

The above configuration enables an exclusion of an unwanted data receipt, by automatically registering the communicant's ID in the ID memory part at a sending time and comparing the communicant's ID with the content of the ID memory part. In this case, since an ordinary sending operation alone enables an automatic ID registration, a cumbersome manual registration becomes unnecessary.

Although an ID often becomes a complex number sequence depending on the kind of CCITT recommendation, since this invention enables an automatic registration of such a number sequence, compared with an existing manual registration, registration errors can be reduced, thus improving reliability.

Also, by memorizing the use frequency of each ID, when there is no empty memory region in the ID memory part at a time of registering a new ID, the least frequently used ID is deleted from the ID memory part. This enables an automatic registration of a new ID without any problem. Thus, a registration operation becomes much simpler.

Incidentally, EP-A-0269978 discloses a network adaptor, for connecting a local area network to a backbone network, that has a table memory for storing an address transformation table. When the capacity of the table memory is fully used, control means delete the entry in the table that has the lowest frequency of use so as to create space for the storage of a new entry in the table.

Reference will now be made, by way of example, to the accompanying drawings, in which:
Figure 1 is a block diagram of conventional communicant verification circuitry;
Figure 2 is a block diagram of parts of communicant verification circuitry embodying the present invention.
Figure 3 is a more detailed block diagram of an embodiment of the invention.
Figure 4 shows a frame format of a facsimile's transmission control procedure.
Figure 5 shows a facsimile's transmission control procedure.
Figure 6 shows an example of a data configuration of an ID signal (telephone number) using a Facsimile Information Field (FIF).

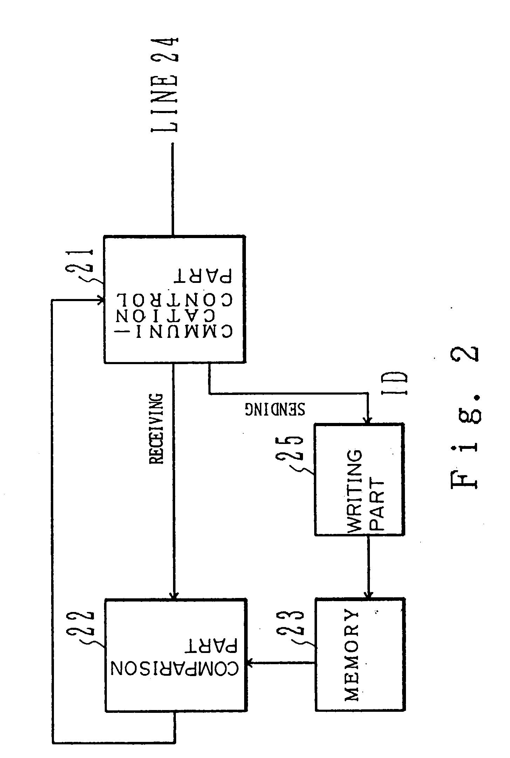

In Figure 2 a communication control part (control means) 21 is connected to a first communication unit such as a FAX machine or the like (not specifically shown in the drawing) for controlling communication processing by that unit. The first communication unit is connected to a plurality of further communication units (communicants) through a line 24.

A memory part (identification data storage means) 23 memorizes the ID of such further communication units (communicant's terminals).

A writing part (automatic registration means) 25 automatically writes in the memory part 23 the ID of the communicant connected through the line 24 under control of the communication control part 21 at a time of sending communication data such as FAX data. A comparison part (comparison means) 22 compares the communicant's ID, received through the line 24 under control of the communication control part 21 at a time of receiving communication data such as FAX data, with each ID that has been automatically registered in the memory 23, and notifies the communication control part 21 of its approval to continue receipt of data only when the received ID conforms with one of the registered IDs, and notifies the communication control part 21 of its disapproval of the receipt of further data when the received ID does not conform with any of the registered IDs.

In this embodiment, since an ID is automatically stored in the memory 23 at the time of sending communication data, a manual ID registration that is necessary in the prior art becomes unnecessary. That is, in this invention the ID of the communicant (further communication unit) to whom data are sent by the local communication apparatus (first communication unit) is automatically registered. In this case, since a user can automatically register an ID by an ordinary sending processing alone, compared with a manual registration, the operation is simplified, and registration errors are reduced.

In the Fig. 2 embodiment it is also possible to provide an area (usage frequency memory means) for memorizing a usage frequency of an automatically registered ID. In this case, if the memory content of the memory 23 exceeds the memory capacity of the memory 23 at a time of registering a new ID in the memory 23, the writing part 25 deletes the least frequently used ID from it and registers the new ID in the memory 23 automatically.

This avoids the need to check whether or not the capacity of the memory 23 is sufficient at a registration time, and further simplifies the registering operation.

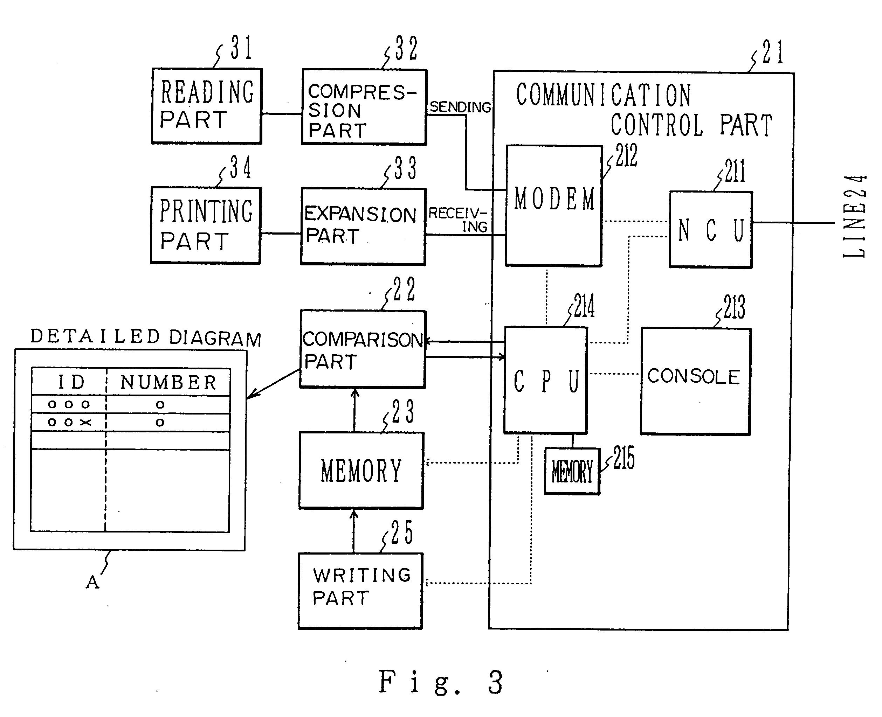

Figure 3 is a block diagram of a preferred embodiment of this invention, applicable to a FAX communication apparatus.

In Figure 3, a communication control part 21, a comparison part 22, a memory 23, a line 24 and a writing part 25 correspond respectively to the parts with the same numbers in Figure 2 and their functions are the same.

The communication control part 21 comprises a network control unit part (hereafter abbreviated as NCU) 211, a MODEM 212, a console 213, a CPU 214 and a memory 215.

The NCU 211 detects a call-up signal from the line 24.

The MODEM 212 converts sending data to a sending signal by a modulation and outputs the sending signal via the NCU 211 to line 24 at a sending time. The MODEM 212 inputs a receiving signal from the line 24 via the NCU 211 and converts it to receiving data by a demodulation at a receiving time.

A user can operate data sending (outgoing commnications) or data receiving (incoming communications) with various switches on the console 213.

The CPU 214 performs an ordinary data sending/receiving processing according to a communication control program stored in the memory 215, and also executes the required processing to automatically register an ID etc, as described later.

The MODEM 212 of the communication control part 21 is connected to a reading part 31 for realizing a FAX sending/receiving function, a compression part 32, an expansion part 33 and a printing part 34. That is, when a FAX message is sent, the reading part 31 reads the original and converts it to image data. The compression part 32 then compresses the image data based on the MH (Modified Huffman) method and outputs them to the MODEM 212 as sending data. When a FAX message is received, the expansion part 33 restores the image data based on the MH method from the received data output of the MODEM 212, and the printing part 34 prints the image data on paper.

At a sending protocol execution time, i.e. at a data sending time (outgoing communication), the writing part 25 automatically registers in the memory 23 the ID (of the receiving communicant) sent from the sending communicant through the communication control part 21. At a receiving protocol execution time, i.e. at a data receiving time (incoming communication), the comparison part 22 compares the sending communicant's ID with each ID already registered in the memory 23. If the sending communicant's ID conforms with one of the registered IDs the comparison part 22 notifies the CPU 214 in the communication control part 21 that it approves of receipt of further data from the sending communicant. If the sending communicant's ID does not conform with any of the registered IDs, the comparison part 22 prohibits the CPU 214 from receiving further data.

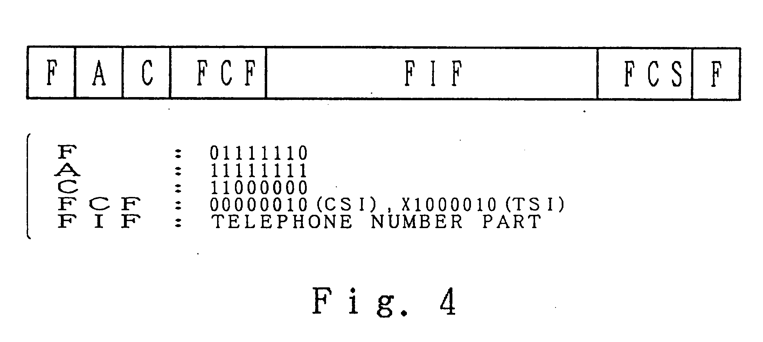

In the embodiment shown in Figure 3, a binary code signal method is adopted as a FAX transmission method (predetermined communication protocol). According to the binary code signal method, a control signal is configured and transmitted in a frame based on a high level data link control procedure (HDLC), whose frame configuration is shown in Figure 4. Figure 4 is based on the international CCITT recommendation T.30.

In Figure 4, a flag sequence "F" denotes a frame division having the format "01111110". Next, an address field "A" has the format "11111111" in the case of a FAX communication. A control field "C" has the format "11000000" in the case of a FAX communication.

A facsimile control field "FCF" and a facsimile information field "FIF" are included in an information field of an HDLC frame. Among the codes of various control signals included in the facsimile control field "FCF", the control signals called a CSI signal and a TSI signal (explained later) relate particularly to this invention. When a CSI signal is set, a "00000010" format is set. When a TSI signal is set, an "X1000010" format is set, where "x" is set to either "1" or "0" (the actual value of the bit concerned is irrelevant to this invention and further explanation is omitted here).

Supplementary information to the control signal shown as the facsimile control field "FCF" is stored in the facsimile information field "FIF". When the CSI signal or the TSI signal described above is set, in particular a telephone number is stored in the FIF. These details are explained later.

In Figure 4, a frame checking sequence "FCS" is a 16 bit sequence for checking a transmission error on a receiving side, and is used for correcting an error based on a generator polynomial "X¹⁵+X¹²+X⁵+1".

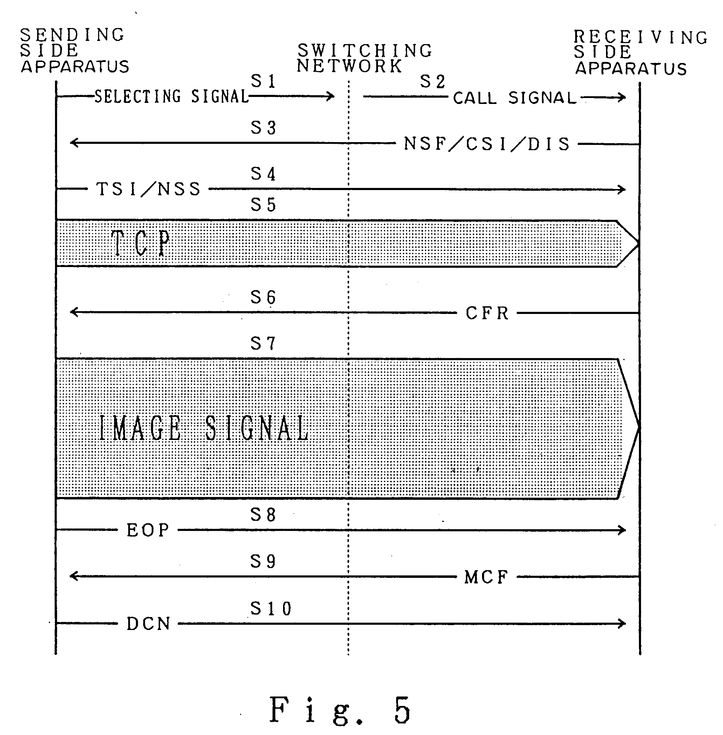

The actions of the embodiment configured as the above description are explained below. The following explanation of the action of the communication apparatus (first communication unit) shown in Figure 3, when it is a sending side apparatus and when it is a receiving side apparatus, is made by commonly referring to the drawing of a signal sequence shown in Figure 5. The action explained below is based on the international CCITT recommendation T.30.

First, the action when the first communication unit of Fig. 3 is the sending side apparatus is explained.

The user of the sending side apparatus inputs the addressee communicant's telephone number (further communication unit's telephone number), i.e. ID, by manipulating the console 213. This ID is sent as a selection signal from the CPU 214 through NCU 211 to the line 24. (Figure 5, S1)

The network side (exchange office) analyzes the selection signal and sends the selected receiving side apparatus (selected further communication unit) a call signal. (Figure 5, S2)

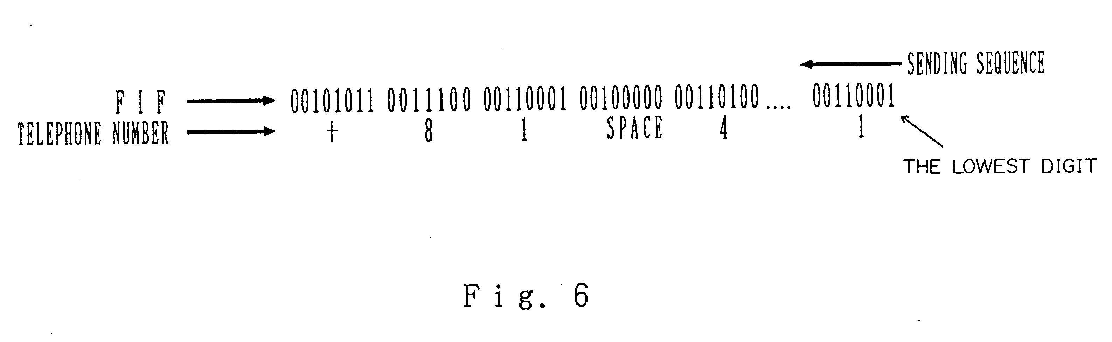

The receiving side apparatus sends a control signal according to a facsimile transmission protocol to the sending side apparatus. These control signals comprise a DIS (Digital Identification Signal), a CSI (Called Subscriber Identification) signal, a NSF (Non-Standard Facilities) signal per the internationally CCITT recommendation T.30. In this case, a code corresponding to each control signal described above is included in the facsimile control field "FCF" of the frame data (having the Figure 4 format) sent to the sending side apparatus. Here, the NSF signal and the DIS are the control signals mainly for notifying the communication function of the receiving side apparatus. Also, the CSI signal is a control signal particularly associated with this invention and is used for notifying the telephone number, i.e. ID, of the receiving side apparatus. This ID is included in the facsimile information field "FIF" of the frame data (having the Figure 4 format) as part of the CSI signal to be sent back to the sending side apparatus. A concrete example of this setting action is later explained using Figure 6. Above action is shown as S3 in Figure 5.

At the sending side apparatus the CPU 214 receives the above described control signal via the NCU 211, analyses it, and identifies the communication function of the receiving side apparatus. Particularly at this time, the CPU 214 identifies the ID of the receiving side apparatus sent by using the frame including the above described CSI signal, and sends this ID to the comparison part 22. At the same time, the CPU 214 sequentially reads out the IDs registered in the memory 23 and sends them to the comparison part 22. The following actions of the comparison part 22 and the writing part 25 relate particularly to this invention.

The comparison part 22 compares the received ID with the IDs read out in turn from the memory 23. When they conform with each other, the comparison part 22 outputs a conformance signal to the CPU 214, whereupon the 214 has the writing part (usage frequency updating means) 25 add one (1) to the numerical value of a number field (usage frequency data item) corresponding to the particular ID within the memory 23. When the comparison part 22 detects a non-conformance, the comparison part 22 outputs a non-conformance signal to the CPU 214. In this case, since the received ID is not registered in the memory 23, the CPU 214 sends this received ID to the writing part (automatic registration means) 25 which writes this ID to the memory 23. Simultaneously, the CPU 214 has the writing part (usage frequency updating means) 25 set one (1) to the numerical value of the number field corresponding to the particular ID within the memory 23. At this time, if the number of the ID memorized in the memory 23 reaches the memory capacity, the CPU 214 examines the contents of the number fields in the memory 23 to detect the least frequently used ID, and registers a new ID after deleting the least frequently used ID. A large initial value is set in the number field of the memory 23, and the value decreases with time. Where the value becomes 0, the ID will be subject to deletion from the memory.

Successively, the sending side selects the communication method (communication speed, resolution, etc.) depending on the communication function of the receiving side apparatus, and sends a control signal per facsimile transmission protocol to the receiving side apparatus. (Figure 5, S4) The action of the receiving side apparatus in receiving these control signals is explained later.

After the control signal described above, the sending side apparatus further sends a TCF (Training Check) signal as a control signal. (Figure 5, S5) This signal is a signal for checking whether or not the MODEM 212 on the receiving side can receive data at the transmission speed the sending side apparatus sets. In this case, a code corresponding to the TCF signal described above is set in the facsimile control field "FCF" of the frame data (having the Figure 4 format) to be sent to the receiving side apparatus.

In response to the transmitted TCF signal described above, the receiving side apparatus returns a CFR (Confirmation to Receive) signal as a control signal indicating that the transmission of the facsimile message can start. (Figure 5, S6) In this case also, the a code corresponding to the CFR signal described above is included in the facsimile control field "FCF" of the frame data (having the Figure 4 format) to be sent to the sending side apparatus.

After the above procedure enables the transmission of a facsimile message (image signal) from the sending side apparatus, the reading part 31 reads the original, the compression part 32 compresses and codes the image data to become the sending data. The sending data are sent to the receiving side apparatus through the MODEM 212 and the NCU 211 within the communication control part 21, as well as the line 24 to the receiving side apparatus. (Figure 5, S7) This image signal is different from a control signal, and is sent as a one page unit continuous bit sequence without being expanded to the frame of HDLC.

After transmission of the image signal is completed, the sending side apparatus sends an EOP (End of Procedure) signal, as a control signal indicating an end of procedure, to the receiving side apparatus. In return, the receiving side apparatus sends an MCF (Message Confirmation) signal, i.e. a control signal meaning a confirmation. (Figure 5, S9) After receiving this signal, the sending side apparatus sends a DCN (Disconnect) signal, i.e. a control signal directing a severance of a call, to the receiving side apparatus, and finishes all the procedures. (Figure 5, S10) Each control signal described above, similar to other control signals, is sent by including a code corresponding to the control signal concerned in the facsimile control field "FCF" of the transmitted frame data having the Figure 4 format

Second, the action when the first communication unit of Fig. 3 is the receiving side apparatus is explained.

As explained earlier, when serving as a sending side apparatus the first communication unit of Fig. 3 has automatically registered the ID of each receiving side apparatus (further communication unit) in the memory 23 based on the sequence of S3 in Figure 5. Now, when it is the sending side apparatus the further communication unit sends a TSI (Transmitting Subscriber Identification) signal and a NSS (Non-Standard facilities Set-up) signal, as control signals, to the receiving side apparatus (first communication unit). (Figure 5, S4) The NSS signal is a control signal indicating which communication function of the receiving side apparatus is selected by the sending side apparatus. The TSI signal is a control signal that particularly relates to this invention, and is a control signal for notifying the telephone number, i.e. ID, of the sending side apparatus. This ID is set in the facsimile information field "FIF" of the frame data (having the Figure 4 format) as part of the TSI signal sent to the receiving side apparatus. A concrete example of this setting action is later explained using Figure 6.

The CPU 214 of the receiving side apparatus (first communication unit) identifies the ID of the sending side apparatus (further communication unit) sent by using a frame including the above described TSI signal, and sends this ID to the comparison part 22. Concurrently, the CPU 214 reads out sequentially from the memory 23 the IDs registered therein and sends them to the comparison part 22. The following actions of the comparison part 22 and the writing part 25 relate particularly to this invention.

The comparison part 22 sequentially compares the received ID with the ID read out from the memory 23. If they conform, the comparison part 22 outputs a conformance signal to the CPU 214. Then, the CPU 214 continues the receiving procedure of Figure 5, S5 and after. At the same time, the CPU 214 has the writing part (usage fmquency updating means) 25 add one (1) to the numerical value of the number field corresponding to the particular ID within the memory 23. (Refer to A of Figure 3.) When the comparison part 22 detects a non-conformance, the comparison part 22 outputs a non-conformance signal to the CPU 214. In this case, since the received ID is not registered in the memory 23, the CPU 214 prohibits the continuation of the receiving procedure of Figure 5, S5 and after, and shifts to a special prohibition procedure that is a procedure used previously and thus explanation thereof is omitted here.

If the receiving procedure is permitted to continue by the CPU 214 of the receiving side apparatus (S5 onwards in Figure 5), then when the image signal is begun to be received (Figure 5, S7), the image signal is converted to receiving data by a demodulation in the MODEM 212. The expansion part 33 restores the image data and the printing part 34 prints the image based on the image data on paper.

The procedures Figure 5, S8 through S10 of and after the receiving action of the image signal described are as explained before.

As noted above, in the FAX communication procedure, especially related to this invention, the ID of the receiving side apparatus or the sending side apparatus is transmitted together with the CSI signal or the TSI signal in the frame data having the Figure 4 format. The ID is transmitted (stored) in the facsimile information field "FIF" of the frame data and has the format exemplified in Figure 6. The telephone number in this case is the international telephone number configured in the order of "a +sign, a country code, and domestic number". An example within Japan is like "+81447771111". Here, "81" is Japan's country code, "44" is the number left after taking the top "0" out from the area code of Kawasaki City "044", and "7771111" is an intra-area number. As shown in Figure 6, each digit of a telephone number is expressed in eight (8) digits of a binary code, and sent sequentially in the order from the last (least significant) digit to the first (most significant) digit. When the total number of digits does not reach twenty (20) digits, a space is filled.

As explained so far, when the communication apparatus configured as shown in Figure 3 acts as the sending side apparatus, the above described ID sent from the receiving side apparatus is automatically registered in the memory 23 by the writing part 25. When the communication apparatus shown in Figure 3 acts as the receiving side apparatus, the ID sent from the sending side apparatus is sequentially compared with each ID stored in the memory 23 by a comparison part 22. If the communicant's ID is already registered in the memory 23, the communication control part 21 continues receiving data; and if not, it stops it. Thus, an ID registration becomes possible without requiring a manual registration of the ID of the communicant's side apparatus.

In the above described embodiment, the ID is stored "as is" to the memory 23, but the memory capacity can be made smaller by using an appropriate compression means. The following two methods are considered for the compression means.
[1] Only the lower (feint significant) digits of the ID are used.
   In this method, at a sending time,
   the CPU 214 selects the lower digits of the ID sent from the communicant as described earlier, and the writing part 25 writes just the selected digits into the memory 23. Meanwhile, at a receiving time, the CPU 214 selects the (same) lower (least significant) digits of the ID sent from the sending side, and the comparison part 22 compares the selected digits with the memory content of the memory 23.
[2] The entire ID is compressed by using an appropriate coding means.
   In this method, at a sending/receiving time, the CPU 214 compresses the ID sent from the communicant e.g. to double digit data based on the CRC coding method.

In the embodiment described earlier, it is also possible to configure the circuitry such that the same predetermined value is subtracted across the board from a number value of the number field corresponding to each ID within the memory 23 at preselected time intervals, until the value reaches zero (0), whereafter no further subtraction is made.

This holds down the memory capacity used for indicating the number, even if the number value shown in the number field becomes large.

In the embodiment described earlier, the value of the number field (usage frequency data item) is incremented by one (1) both at a sending time and at a receiving time, but it is possible alternatively to increment the number field value only at one of these two times.

## Claims

1. Communicant verification circuitry for use in a first communication unit to selectively permit or prohibit receipt by the unit of incoming communications from further communication units connected with the first communication unit when it is in use, the first and further communication units having a predetermined communication protocol according to which, when the first communication unit initiates an outgoing communication to one of the further communication units, the further communication unit concerned responds by sending back to the first communication unit an item of identification data (ID) identifying the further communication unit concerned, which item is also sent by the further communication unit concerned to the first communication unit when the further communication unit concerned initiates a communication to the first communication unit, the circuitry including:
identification data (ID) memory means (23) for storing, for each of the said further communication units from which receipt of a communication is permitted, such an item of identification data (ID) identifying the unit concerned;
comparison means (22) operable, upon receipt by the first communication unit of an incoming communication from one of the further communication units, to receive the item of identification data (ID) sent by the further communication unit concerned and to compare it in turn with each of the items of identification data (ID) stored in the said identification data memory means (23); and
control means (21) for permitting the first communication unit to continue to receive the incoming communication only if the result of the comparison is that the received item of identification data (ID) matches one of the stored items of identification data (ID);
characterised by automatic registration means (25) operable, upon such initiation by the first communication unit of an outgoing communication to one of the further communication units, to automatically register in the identification data memory means (23) the item of identification data (ID) sent back to the first communication unit by the further communication unit concerned, so as to permit receipt by the first communication unit of a subsequent incoming communication from the further communication unit concerned.

2. Communicant verification circuitry as claimed in claim 1, further including:
usage frequency memory means (23) for storing usage frequency data items corresponding respectively to the identification data items (ID) stored in the said identification data memory means (23); and
usage frequency updating means (25) operable, when the first communication unit sends and/or receives a communication to/from one of the said further communication units, to update the usage frequency data item that corresponds to the stored identification data item (ID) relating to the further communication unit concerned;
the said controls means (21) being operable, when registering a new identification data item sent back to the first communication unit by one of the further communication units, to determine whether the identification data memory means (23) has a free storage region for storing the new item concerned and, if so, to control the automatic registration means (25) to store the item concerned in that free storage region but, if not, to employ the usage frequency data items to delete from the identification data memory means (23) the identification data item for the least-frequently-used one of the further communication units, so as to free the storage region in which that identification data item was stored for the automatic registration means (25) to store the new identification data item to be registered.

3. Communicant verification circuitry as claimed in claim 1 or 2, wherein each identification data item (ID) is the telephone number of the further communication unit concerned.

4. Communicant verification circuitry as claimed in any preceding claim, wherein, in such an outgoing communication made by the first communication unit to one of the further communication units, the identification data item is sent back by the further communication unit concerned to the first communication unit by way of a high level data link control procedure (HDLC) frame in which a called-subscriber-identification signal (CSI) is included by a binary code signal method.

5. Communicant verification circuitry as claimed in any preceding claim, wherein, in such an incoming communication from one of the further communication units to the first communication unit, the identification data item is sent by the further communication unit concerned to the first communication unit by way of a high level data link control procedure (HDLC) frame in which a transmitting-subscriber-identification (TSI) signal is included by a binary code signal method.

6. Communicant verification circuitry as claimed in any preceding claim, wherein the said first and further communication units are facsimile communication units.

## Patentansprüche

1. Kommunikanten-Verifikationsschaltungsaufbau zur Verwendung in einer ersten Kommunikationseinheit, um selektiv einen Empfang ankommender Kommunikationen von weiteren Kommunikationseinheiten, die mit der ersten Kommunikationseinheit verbunden sind, wenn sie in Verwendung steht, durch die Einheit zu gestatten oder zu verbieten, wobei die erste und die weiteren Kommunikationseinheiten ein vorherbestimmtes Kommunikationsprotokoll aufweisen, gemäß dem, wenn die erste Kommunikationseinheit eine abgehende Kommunikation an eine der weiteren Kommunikationseinheiten initiiert, die betreffende weitere Kommunikationseinheit anspricht, indem sie zur ersten Komnunikationseinheit ein Feld von die betreffende weitere Kommunikationseinheit identifizierenden Identifikationsdaten (ID) zurücksendet, welches Feld von der betreffenden weiteren Kommunikationseinheit auch an die erste Kommunikationseinheit gesendet wird, wenn die betreffende weitere Kommunikationseinheit eine Kommunikation an die erste Kommunikationseinheit initiiert, welcher Schaltungsaufbau enthält:
eine Identifikationsdaten (ID)-Speichereinrichtung (23) zum Speichern eines derartigen Felds von die betreffende Einheit identifizierenden Identifikationsdaten (ID) für jede der genannten weiteren Kommunikationseinheiten, von denen der Empfang einer Kommunikation gestattet wird;
eine Vergleichseinrichtung (22), die beim Empfang einer ankommenden Kommunikation von einer der weiteren Kommunikationseinheiten durch die erste Kommunikationseinheit betreibbar ist, das von der betreffenden weiteren Kommunikationseinheit gesendete Feld von Identifikationsdaten (ID) zu empfangen, und dieses ihrerseits mit jedem der in der genannten Identifikationsdaten (ID)-Speichereinrichtung (23) gespeicherten Felder von Identifikationsdaten (ID) zu vergleichen; und
eine Steuereinrichtung (21), um der ersten Kommunikationseinheit zu gestatten, den Empfang der ankommenden Kommunikation nur dann fortzusetzen, wenn das Ergebnis des Vergleichs ist, daß das empfangene Feld von Identifikationsdaten (ID) mit einem der gespeicherten Felder von Identifikationsdaten (ID) übereinstimmt;
gekennzeichnet durch eine automatische Registrierungseinrichtung (25), die bei einer derartigen Initiation einer abgehenden Kommunikation an eine der weiteren Kommunikationseinheiten durch die erste Kommunikationseinheit betreibbar ist, automatisch in der Identifikationsdaten-Speichereinrichtung (23) das Feld von Identifikationsdaten (ID) zu registrieren, das von der weiteren betreffenden Kommunikationseinheit an die erste Kommunikationseinheit zurückgesendet wird, um einen Empfang einer nachfolgenden ankommenden Kommunikation von der betreffenden weiteren Kommunikationseinheit durch die erste Kommunikationseinheit zu gestatten.

2. Kommunikanten-Verifikationsschaltungsaufbau nach Anspruch 1, welcher ferner enthält:
eine Verwendungsfrequenz-Speichereinrichtung (23) zum Speichern von Verwendungsfrequenz-Datenfeldern, die jeweils den in der genannten Identifikationsdaten-Speichereinrichtung (23) gespeicherten Identifikationsdatenfeldern (ID) entsprechen; und
eine Verwendungsfrequenz-Aktualierungseinrichtung (25), die betreibbar ist, wenn die erste Kommunikationseinheit eine Kommunikation an eine der genannten weiteren Kommunikationseinheiten sendet und/oder von dieser empfängt, das Verwendungsfrequenz-Datenfeld, welches dem gespeicherten Identifikationsdatenfeld (ID) entspricht, das sich auf die betreffende weitere Kommunikationseinheit bezieht, zu aktualisieren;
wobei die genannte Steuereinrichtung (21) betreibbar ist, wenn ein neues Identifikationsdatenfeld registriert wird, das von einer weiteren Kommunikationseinheiten zur ersten Kommunikationseinheit zurückgesendet wird, zu bestimmen, ob die Identifikationsdaten-Speichereinrichtung (23) eine freie Speicherzone zum Speichern des betreffenden neuen Datenfelds hat, und, wenn dies der Fall ist, die automatische Registrierungseinrichtung (25) zu steuern, das betreffende Feld in dieser freien Speicherzone zu speichern, jedoch, wenn dies nicht der Fall ist, die Verwendungsfrequenz-Datenfelder einzusetzen, um aus der Identifikationsdaten-Speichereinrichtung (23) das Identifikationsdatenfeld für die am wenigsten häufig verwendete der weiteren Kommunikationseinheiten zu löschen, so daß die Speicherzone frei wird, in der das Identifikationsdatenfeld für die automatische Registrierungseinrichtung (25) gespeichert war, um das zu registrierende neue Identifikationsdatenfeld zu speichern.

3. Kommunikanten-Verifikationsschaltungsaufbau nach Anspruch 1 oder 2, bei welchem jedes Identifikationsdatenfeld (ID) die Telefonnummer der betreffenden weiteren Kommunikationseinheit ist.

4. Kommunikanten-Verifikationsschaltungsaufbau nach einem der vorhergehenden Ansprüche, bei welchem bei einer derartigen abgehenden Kommunikation, die von der ersten Kommunikationseinheit an eine der weiteren Kommunikationseinheiten erfolgt, das Identifikationsdatenfeld von der betreffenden weiteren Kommunikationseinheit an die erste Kommunikationseinheit durch einen Rahmen eines codeunabhängigen Datenverbindungssteuerungsverfahrens (HDLC) zurückgesendet wird, in dem ein Angerufenen-Teilnehmer-Identifikationssignal (CSI) durch ein Binärcode-Signalverfahren enthalten ist.

5. Kommunikanten-Verifikationsschaltungsaufbau nach einem der vorhergehenden Ansprüche, bei welchem bei einer derartigen ankommenden Kommunikation von einer der weiteren Kommunikationseinheiten an die erste Kommunikationseinheit das Identifikationsdatenfeld von der betreffenden weiteren Kommunikationseinheit an die erste Konmunikationseinheit durch einen Rahmen eines codeunabhängigen Datenverbindungssteuerungsverfahrens (HDLC) zurückgesendet wird, in dem ein Anrufer-Teilnehmer-Identifikationssignal (TSI) durch ein Binärcode-Signalverfahren enthalten ist.

6. Kommunikanten-Verifikationsschaltungsaufbau nach einem der vorhergehenden Ansprüche, bei welchem die genannte erste und die weiteren Kommununikationseinheiten Telefax-Kommunikationseinheiten sind.

## Revendications

1. Circuit de vérification de participants utilisé dans une première unité de communication pour permettre ou interdire sélectivement la réception par l'unité de communication entrante d'autres unités de communication raccordées à la première unité de communication lorsqu'elle est utilisée, les première et autres unités de communication ayant un protocole de communication prédéterminé selon lequel, lorsque la première unité de communication initialise une communication sortante vers une des autres unités de communication, l'autre unité de communication concernée répond en renvoyant à la première unité de communication un élément de données d'identification (identifiant ID) identifiant l'autre unité de communication concernée, lequel élément est aussi envoyé par l'autre unité de communication concernée à la première unité de communication lorsque l'autre unité de communication concernée initialise une communication vers la première unité de communication, le circuit comprenant :
un moyen de mémoire de données d'identification (identifiant ID) (23) pour un stockage, pour chacune desdites autres unités de communication à partir desquelles la réception d'une communication est permise, telle qu'un élément de données d'identification (identifiant ID) identifiant l'unité concernée ;
un moyen de comparaison (22) utilisable, lors de la réception par la première unité de communication d'une communication entrante d'une des autres unités de communication, pour recevoir l'élément de données d'identification (identifiant ID) envoyé par l'autre unité de communication concernée et pour le comparer à son tour à chacun des éléments de données d'identification (identifiant ID) stocké dans ledit moyen de mémoire de données d'identification (23) ; et
un moyen de commande (21) pour permettre à la première unité de communication de continuer à recevoir la communication entrante seulement si le résultat de la comparaison est que l'élément reçu des données d'identification (identifiant ID) correspond à un des éléments stockés de données d'identification (identifiant ID) ;
caractérisé par un moyen d'enregistrement automatique (25) utilisable, lors de cette initialisation par la première unité de communication d'une communication sortante vers une des autres unités de communication, pour enregistrer automatiquement dans le moyen de mémoire de données d'identification (23) l'élément de données d'identification (identifiant ID) renvoyé à la première unité de communication par l'autre unité de communication concernée, afin de permettre la réception par la première unité de communication d'une communication entrante ultérieure de l'autre unité de communication concernée.

2. Circuit de vérification de participants selon la revendication 1, comprenant en outre :
un moyen de mémoire de fréquence d'utilisation (23) pour stocker des éléments de données de fréquence d'utilisation correspondant respectivement aux éléments de données d'identification (identifiant ID) stockés dans ledit moyen de mémoire de données d'identification (23) ; et
un moyen de mise à jour de fréquence d'utilisation (25) utilisable, lorsque la première unité de communication envoie et/ou reçoit une communication vers/d'une desdites autres unités de communication, pour mettre à jour l'élément de données de fréquence d'utilisation qui correspond à l'élément de données d'identification stocké (identifiant ID) concernant l'autre unité de communication concernée ;
ledit moyen de commande (21) étant utilisable, lors de l'enregistrement d'un nouvel élément de données d'identification renvoyé à la première unité de communication par une des autres unités de communication, pour déterminer si le moyen de mémoire de données d'identification (23) a une zone de stockage libre pour stocker le nouvel élément concerné et, si oui, pour commander le moyen d'enregistrement automatique (25) pour stocker l'élément concerné dans cette zone de stockage libre mais, si non, pour employer les éléments de données de fréquence d'utilisation pour effacer du moyen de mémoire de données d'identification (23) l'élément de données d'identification de l'unité la moins fréquemment utilisée des autres unités de communication afin de libérer la zone de stockage dans laquelle cet élément de données d'identification était stocké pour que le moyen d'enregistrement automatique 25 stocke le nouvel élément de données d'identification à enregistrer.

3. Circuit de vérification de participants selon la revendication 1 ou 2, dans lequel chaque élément de données d'identification (identifiant ID) est un numéro de téléphone de l'autre unité de communication concernée.

4. Circuit de vérification de participants selon l'une quelconque des revendications précédentes, dans lequel dans une telle communication sortante faite par la première unité de communication vers une des autres unités de communication, l'élément de données d'identification est renvoyé par l'autre unité de communication concernée à la première unité de communication au moyen d'une trame de procédure de commande de liaison de données de niveau haut (HDLC) dans laquelle un signal d'identification d'abonné appelé (CSI) est compris dans un procédé de signal de code binaire.

5. Circuit de vérification de participants selon l'une quelconque des revendications précédentes, dans lequel dans cette communication entrante d'une des autres unités de communication vers la première unité de communication, l'élément de données d'identification est envoyé par l'autre unité de communication concernée à la première unité de communication au moyen d'une trame procédure de commande de liaison de données de niveau haut (HDLC) dans laquelle un signal d'identification d'abonné transmettant (TSI) est compris dans un procédé de signal de code binaire.

6. Circuit de vérification de participants selon l'une quelconque des revendications précédentes, dans lequel lesdites première et autres unités de communication sont des unités de communication de télécopie.
